# EUROPÄISCHE PATENTANMELDUNG

(11) **EP 1 123 940 A1**
(43) Veröffentlichungstag der Anmeldung: **16.08.2001**
(21) Anmeldenummer: 01100144.3
(22) Anmeldetag: 16.01.2001
(51) Int. Cl.: C08C 19/20, C08L 19/00, C08F 8/36, C08F 236/10

(54) **Verfahren zur Herstellung eines Copolymerisats auf der Basis von vinylaromatischen Verbindungen und kojugierten Dienen**

(30) Priorität: 28.01.2000 DE 10003743
(71) Anmelder: BAYER AG, 51368 Leverkusen (DE)
(72) Erfinder: Giebeler, Ellen, Dr., 50735 Köln (DE); Brandt, Heinz-Dieter, Dr., 47877 Willich (DE); Engehausen, Rüdiger, Dr., 41539 Dormagen (DE); Marwede, Günter, Dr., 51069 Köln (DE)

(57) **Zusammenfassung**

Gegenstand der vorliegenden Erfindung ist ein Verfahren zur Herstellung eines Copolymerisats auf Basis von vinylaromatischen Verbindungen und konjugierten Dienen, in dem man die Copolymerisate nach deren Polymerisation mit mehrfunktionellen Schwefelhalogeniden in Gegenwart eines Katalysators bei Temperaturen im Bereich von 20 bis 130°C behandelt.

Die erfindungsgemäß hergestellten Copolymerisate weisen deutlich verbessertes Verarbeitungsverhalten durch gezielten Mastikationseffekt und gute mechanische Eigenschaften auf.

## Beschreibung

Gegenstand der vorliegenden Erfindung ist ein Verfahren zur Herstellung eines Copolymerisats auf Basis von vinylaromatischen Verbindungen und konjugierten Dienen mit niedrigem cold-flow, verbesserter Verarbeitbarkeit und guten mechanischen Eigenschaften.

Aus DE-A 4 436 059 und DE-A 1 260 794 sind Verfahren zur Herstellung kautschukelastischer Dienpolymerer bekannt, bei denen ein verbesserter cold-flow erzielt wird durch Behandlung der Dienpolymeren mit bestimmten Schwefelhalogeniden. Als cold-flow wird dabei die Eigenschaft von Polymeren verstanden, sich bei geringem, aber stetigem Kräfteeinfluss, der bereits durch das eigene Gewicht gegeben ist, zu deformieren. Diese Eigenschaft ist besonders störend bei der Lagerung von Elastomeren und verlangt einen erheblichen technischen und wirtschaftlichen Aufwand.

Aufgabe der vorliegenden Erfindung ist es nun, den cold-flow bei vinylaromatischen Diencopolymeren zu verringern und dabei gleichzeitig die Verarbeitbarkeit und die mechanischen Eigenschaften der Diencopolymerisate zu verbessern.

Gegenstand der vorliegenden Erfindung ist daher ein Verfahren zur Herstellung von Copolymerisaten auf Basis von vinylaromatischen Verbindungen und konjugierten Dienen, das dadurch gekennzeichnet ist, dass man die Copolymerisate nach deren Polymerisation mit mehrfunktionellen Schwefelhalogeniden in Gegenwart eines Katalysators bei Temperaturen im Bereich von 20 bis 130°C behandelt.

Als vinylaromatische Verbindungen die zum Aufbau der Copolymerisate dienen, kommen beispielsweise in Frage: Styrol, p-Methylstyrol, α-Methylstyrol, 3,5-Dimethylstyrol, Vinylnaphthalin, p-tert.-Butylstyrol, Divinylbenzol und Diphenylethylen.

Als konjugierte Diene können in das erfindungsgemäße Verfahren eingesetzt werden: 1,3-Butadien, Isopren, 1,3-Pentadien, 2,3-Dimethyl-1,3-butadien, 1-Phenyl-1,3-butadien, 1,3-Hexadien sowie 1,3-Heptadien.

Solche vinylaromatischen Diencopolymerisate sind bekannt - ebenso wie deren Herstellung durch Emulsionspolymerisation oder anionische Polymerisation - und beispielsweise beschrieben in Ullmann's Encyclopedia of Industrial Chemistry, 6^{th} Edition, 1999 Electronic Release, 1999 Wiley-VCH, Weinheim, und zwar in den Kapiteln "Rubber, 3. Synthetic, 2.1 Emulsion Styrene-Butadiene Rubber (E-SBR) bzw. 3.1.1 Solution 1,3-Butadiene-Styrene Rubber (S-SBR) and Styrene-Isoprene-Butadiene Rubber (S-SIBR).

Die Emulsionspolymerisation wird bekannterweise durchgeführt durch Polymerisation der die Copolymeren aufbauenden Monomeren in Gegenwart von einem Radikalinitiator, z.B. einem Redoxsystem und einem Regler, z.B. ein Dodecylmercaptan, sowie einem Emulgator in wässrigem Lösungsmittel und einem Short-Stop-Reagenz zum Abstoppen.

Die anionische Polymerisation wird entsprechend in Gegenwart von einem Initiator auf Alkalimetallbasis, z.B. n-Butyllithium, in einem Kohlenwasserstoff als Lösungsmittel durchgeführt. Zusätzlich können die bekannten Randomizer, z.B. Kaliumalkoholate, und Kontrollagentien für die Mikrostruktur des Polymers, z.B. Ether oder tert.-Amin, verwendet werden.

Nach der Polymerisation der vinylaromatischen Diencopolymeren werden erfindungsgemäß die Copolymerisate mit mehrfunktionellen Schwefelhalogeniden in Gegenwart eines Katalysators behandelt.

Die Halogenide des Schwefels können dabei in einem Kneter oder auf einer Walze mit den Copolymerisaten gemischt werden. Technisch einfacher ist es jedoch, insbesondere bei der Lösungspolymerisation, die Schwefelhalogenide in die Lösung der Copolymerisate einzudosieren. Diese Methode ist besonders einfach und mit geringem technischen Aufwand durchzuführen, da die genannten Schwefelhalogenide in den üblichen Polymerisationslösungsmitteln, wie Heptan, Hexan, Pentan, Benzol, Toluol und/oder Cyclohexan, löslich sind und eventuell nicht umgesetztes Schwefelhalogenid im Rahmen der Aufarbeitung entfernt werden kann.

Wie erwähnt, wird die Behandlung der vinylaromatischen Diencopolymeren mit den mehrfunktionellen Schwefelhalogeniden in Gegenwart eines Katalysators durchgeführt.

Als Katalysatoren eignen sich dabei Lewis-Säuren, wie Bortrifluorid, Zinkdichlorid, Triethylaluminium, Aluminiumtrichlorid, Aluminiumtribromid, Zinntetrachlorid und Titantetrachlorid, bevorzugt Aluminiumtrichlorid, sowie tert.-Amine, wie Diisopropylethylamin, Diazabicycloundecan und Triethylamin.

Als mehrfunktionelle Schwefelhalogenide können in das erfindungsgemäße Verfahren eingesetzt werden: Dischwefeldichlorid, Schwefeldichlorid, Thionylchlorid, Polyschwefeldichlorid, Dischwefeldibromid oder Polyschwefeldibromid, bevorzugt Dischwefeldichlorid.

Die Schwefelhalogenide können sowohl einzeln als auch im Gemisch untereinander eingesetzt werden, ebenso wie die zuvor erwähnten Katalysatoren.

Die mehrfunktionellen Schwefelhalogenide werden im allgemeinen in das erfindungsgemäße Verfahren in Mengen von 0,005 bis 5,0, bevorzugt 0,01 bis 0,5 Gew.-%, bezogen auf die Masse des Copolymerisats, eingesetzt. Die Menge an Katalysator liegt im allgemeinen bei 0,05 bis 5,0, bevorzugt 0,1 bis 2,0 Gew.-%, bezogen auf auf die Masse des Copolymerisats.

Das erfindungsgemäße Verfahren wird bevorzugt bei Temperaturen im Bereich von 25 bis 120°C durchgeführt. Nach Beendigung der Behandlung der vinylaromatischen Diencopolymeren mit den mehrfunktionellen Schwefelhalogeniden werden die vinylaromatischen Diencopolymere in der Weise aufgearbeitet, dass man die Lösung mit einem Stabilisierungsmittel, wie 2,6-Di-tert-butyl-4-methylphenol und Araldite® DY 026SP der Fa. BASF AG vermischt und das vinylarmatische Diencopolymere durch Eintragen der Lösung in Alkohol, wie Ethanol oder Isopropanol, oder siedendes Wasser isoliert.

Bei dem erfindungsgemäßen Verfahren überrascht insbesondere, dass nicht nur der cold-flow verbessert werden konnte, sondern auch die Verarbeitbarkeit der Diencopolymerisate sowie die mechanischen Eigenschaften der daraus hergestellten Vulkanisate. Die erfindungsgemäßen Copolymerisate finden daher Verwendung zur Herstellung von Formkörpern aller Art, insbesondere Reifenbauteilen, wie Seitenwände und Laufflächen.

In der erwähnten DE-A 1 260 794 wird nämlich die Lehre vermittel, dass bei der Herstellung kautschukelastischer Dienpolymerer, deren cold-flow durch Behandlung mit Schwefelhalogeniden verbessert werden kann, ohne dass deren Verarbeitbarkeit beeinträchtigt und ohne dass die mechanischen Eigenschaften der Vulkanisate beeinflusst werden (siehe Spalte 1, Zeilen 25-30). Nicht abzuleiten ist aus dem genannten Stand der Technik jedoch, dass bei vinylaromatischen Diencopolymeren durch entsprechende Behandlung mit Schwefelhalogeniden in Gegenwart eines Katalysators neben dem cold-flow zusätzlich noch deren Verarbeitbarkeit und die mechanischen Eigenschaften der daraus hergestellten Vulkanisate verbessert werden können. Dies ist, wie oben geschildert, auf Grund des bekannten Standes der Technik als überraschend zu werten.

### Beispiele

Die Bestimmung des Gehaltes an Styrol im Polymeren sowie der Selektivität des Polybutadiens (1,4-cis-, 1,4-trans- und 1,2-Gehalt) erfolgt mittels IR-Spektroskopie vor erfolgter Modifizierung. Der Mooney-Wert des Polymeren wurde vor und nach der Modifizierung bestimmt.

### Beispiel 1 bis 6

Kommerziell erhältliche Styrol-Butadien-Copolymere und Butadien-Kautschuke der Fa. Bayer AG wurden in Hexan (Isomerengemisch) gelöst und auf 50°C erhitzt. Unter Rühren wurde langsam ein Gemisch von Dischwefeldichlorid (Merck AG) als 0.1%ige Lösung in Hexan und Aluminiumtrichlorid als 1%ige Lösung in Diethylether zugegeben. Die Polymerlösung wurde zwei Stunden nachgerührt, und das Polymer durch Fällen der Polymerlösung in Ethanol mit 0.5 phr BHT (2,6-Di-tert-butyl-4-methylphenol) und 0.16 phr Araldite® DY 026SP (BASF AG) isoliert und das Polymer im Vakuum bei 60°C getrocknet.

Die Ansatzgrößen, Reaktionsbedingungen und die Eigenschaften der erhaltenen Polymeren sind in Tabelle 1 angegeben.

**Tabelle 1:**

| Beispiel 1 bis 6 | | | | | | |
|---|---|---|---|---|---|---|
| **Beispiel** | **1** | **2** | **3** | **4** | **5** | **6** |
| Buna SL 25-0 in g | 2400 | | | | | |
| Buna VSL 2525-0 in g | | 100 | | | | |
| Buna VSL 2525-0 in g | | | 100 | | | |
| Buna VSL 5025-0 in g | | | | 2400 | | |
| Buna VI 47-0 in g | | | | | 100 | |
| Buna CB 10 in g | | | | | | 2400 |
| Hexan in g | 1360 | 570 | 570 | 1360 | 570 | 1360 |

| **Modifizierung** | | | | | | |
|---|---|---|---|---|---|---|
| S₂Cl₂ in g | 3 | 0,1 | 0,1 | 9 | 0,1 | 3 |
| AlCl₃ in g | 15 | 0 | 0,2 | 15 | 0,2 | 15 |

| **Polymer** | | | | | | |
|---|---|---|---|---|---|---|
| Gehalt Styrol in Gew-% | 29,0 | 26,3 | 26,3 | 23,6 | 0 | 0 |
| Gehalt Butadien in Gew-% | 71,0 | 73,7 | 73,7 | 76,4 | 100 | 100 |
| cis in % | 23,1 | 19,2 | 19,2 | 11,6 | 17,9 | 97,9 |
| trans in % | 39,5 | 31,8 | 31,8 | 15,7 | 29,5 | 0,9 |
| 1,2 in % | 8,4 | 22,7 | 22,7 | 49,1 | 52,6 | 1,2 |
| ML₁₊₄(100°C) vor Reaktion | 50 | 51 | 51 | 50 | 48 | 44 |
| ML₁₊₄(100°C) nach Reaktion | 65 | 51 | 68 | 94 | 77 | 61 |

Die eingesetzten Buna-Kautschuke sind Handelsprodukte der Bayer AG, deren Bezeichnung als Warenzeichen eingetragen.

### Beispiel 7 bis 9

Die Polymerisationen wurden unter Auschluß von Luft und Feuchtigkeit in Stickstoff-Atmosphäre durchgeführt.

Die Polymerisation erfolgte in einem 20-Liter-Büchi-Stahlautoklaven mit Rührer und Mantelheizung. Unter Stickstoff wurden die in Tabelle 2 angegebenen Mengen an Styrol, 1,3-Butadien, Hexan (Isomerengemisch), Initiatorlösung (n-Butyllithium in n-Hexan), Alkalimetall-Alkoholat Kalium-*tert*-amylat (KTA) und Modifier Diethoxyethan (DEE) zugegeben. Die Temperatur wurde auf 60°C eingestellt. Das Polymer wurde nach Erreichen vollständigen Umsatzes (ca. 2h) mit Ethanol abgestoppt (Beispiel 7). Zu der abgestoppten (Beispiel 7) bzw. lebenden (Beispiel 8 und 9) Polymerlösung wurde unter Rühren langsam ein Gemisch von Dischwefeldichlorid als 0.1%ige Lösung in Hexan und Aluminiumtrichlorid als 1%ige Lösung in Diethylether zugegeben. Nach einer Reaktionszeit von 2,5h bei 50°C wurde das modifizierte Polymer durch Fällen der Polymerlösung in Ethanol mit 0.5 phr BHT (2,6-Di-tert-butyl-4-methylphenol) und 0.16 phr Araldite® DY 026SP isoliert und bis zur Massekonstanz im Vakuumtrockenschrank bei 60°C getrocknet.

Die Ansatzgrößen, Reaktionsbedingungen und die Eigenschaften der erhaltenen Polymeren sind in Tabelle 2 angegeben.

**Tabelle 2:**

| Beispiel 7 bis 9 | | | |
|---|---|---|---|
| **Beispiel** | **7** | **8** | **9** |
| **Polymerisation** | | | |
| BuLi in mmol | 10 | 10,35 | 10,5 |
| Hexan in g | 8500 | 8500 | 8500 |
| Styrol in g | 375 | 375 | 300 |
| 1,3-Butadien in g | 1125 | 1125 | 1200 |
| KTA in mmol | 0,565 | 0,565 | 0,565 |
| DEE in mmol | 3,9 | 3,9 | 18 |

| **Modifizierung** | | | |
|---|---|---|---|
| Ethanol in mmol | 15 | - | - |
| S₂Cl₂ in g | 1,39 | 0,39 | 0,38 |
| AlCl₃ in g | 6,94 | 1,95 | 1,88 |

| **Polymer** | | | |
|---|---|---|---|
| Gehalt Styrol in Gew-% | 25,5 | 26,0 | 18,8 |
| Gehalt Butadien in Gew-% | 74,5 | 74,0 | 81,2 |
| cis in % | 19,3 | 18,8 | 13,0 |
| trans in % | 30,9 | 31,1 | 17,9 |
| 1,2 in % | 24,3 | 24,1 | 50,3 |
| ML₁₊₄(100°C) vor Reaktion | 44 | 38 | 42 |
| ML₁₊₄(100°C) nach Reaktion | 52 | 51 | 54 |

Die in den Beispielen 1, 4 und 6 hergestellten Polymere wurden in üblichen Rußmischungen eingesetzt:

**Tabelle 3**

| | |
|---|---|
| Polymer* | 100 |
| Ruß N-234 (Degussa-Hüls) | 50 |
| Öl Enerthene 1849-1 (BP) | 5 |
| Zinkoxid RS (Degrillo) | 3 |
| Stearinsäure (Henkel KG) | 2 |
| Antilux 654 (Rhein Chemie) | 1,5 |
| Vulkanox HS (Bayer) | 1 |
| Vulkanox 4020 (Bayer) | 1 |
| Vulkacit CZ (Bayer) | 1,4 |
| Vulkacit D (Bayer) | 0,3 |
| Schwefel (Solvey) | 1,8 |

| | |
|---|---|
| * Buna CB 10, SL 25-0, VSL 5025-0: Handelsprodukte der Firma Bayer | |

Im Mischungskneter GK 1,5 wird bei 55 U/min und einer Vorlauftemperatur von 60°C der Kautschuk vorgelegt und 30 sec. geknetet. Bei konstanter Drehzahl werden Ruß, Öl, Zinkoxid, Stearinsäure und Alterungsschutzmittel zugegeben und weitere 2 Minuten geknetet. Nach kurzem Lüften des Stempels werden nochmals 1,5 Minuten (bei Gesamtmischzeit 4 Minuten) bzw. 7,5 Minuten (bei Gesamtmischzeit 10 Minuten) nachgemischt. Auf der Walze werden bei 40°C Schwefel und Beschleuniger bis zur Homogenität des Fells ca. 5 Min. beigemischt.

Im Kneter wurden die Mischungen jeweils 4 Minuten bzw. 10 Minuten gemischt. Dabei ergaben sich folgenden Mooney Werte der Produkte:

**Tabelle 4**

| Beispiel | 10 | 11 | 12 | 13 | 14 | 15 |
|---|---|---|---|---|---|---|
| Polymer | Buna SL 25-0 | Beispiel 1 | Buna CB 10 | Beispiel 6 | Buna VSL 5025-0 | Beispiel 4 |
| ML 1+4, 10 Min. | 65,0 | 72,4 | 82,8 | 92,0 | 65,3 | 72,3 |
| ML 1+4, 4 Min. | 61,7 | 67,7 | 76,4 | 79,5 | 62,0 | 68,6 |
| Differenz | 3,3 | 4,7 | 6,4 | 12,5 | 3,3 | 3,7 |

Es zeigte sich, daß die modifizierten Polymere einen größeren Abbau der Mooney Viskosität aufweisen als die nicht modifizierten Produkte, die Verarbeitbarkeit hat sich also verbessert. Dieser gezielte Mastikationseffekt bietet den wesentlichen Vorteil, dass ähnlich dem Naturkautschuk bessere Einarbeitung und bessere Verteilung der Füllstoffe und Kautschukchemikalien gewährleistet ist.

**Tabelle 5**

| | | | | | | | |
|---|---|---|---|---|---|---|---|
| Beispiel | DIN-Norm | 10 | 11 | 12 | 13 | 14 | 15 |
| H23 (Shore A) | DIN 53505 | 68 | 72 | 70 | 71 | 73 | 75 |
| H70 (Shore A) | DIN 53505 | 64 | 66 | 68 | 69 | 65 | 70 |
| E70(%) | DIN 53512 | 50 | 51 | 61 | 63 | 43 | 44 |
| tan δ, 60°C | DIN 53513 | 0,147 | 0,136 | 0,121 | 0,113 | 0,167 | 0,161 |

An den Prüfkörpern wurden anwendungstechnische Daten bestimmt. Aus der Tabelle 5 ist ersichtlich, daß bei vergleichbaren Härten nach erfindungsgemäßer Modifizierung die Werte für E70 steigen und die Werte tan delta (60°C) abnehmen, was der Experte mit niedrigerem Rollwiderstand korreliert.

### Beispiele 16 bis 21

Die in den Beispielen 1, 4 und 6 hergestellten Polymere wurden in üblichen Silicamischungen eingesetzt:

**Tabelle 6**

| | |
|---|---|
| Polymer | 100 |
| Vulkasil S (Bayer) | 70 |
| Silan Si 69 (Degussa Hüls) | 6 |
| Ruß N 121 (Degussa Hüls) | 10 |
| Enerthene 1849-1 (BP) | 30 |
| ZnO RS (Degrillo) | 3 |
| Stearinsäure (Henkel) | 1 |
| Antilux 654 (Rhein-Chemie) | 1 |
| Vulkanox HS (Bayer) | 1,5 |
| Vulkanox 4020 (Bayer) | 1,5 |
| Vulkacit CZ (Bayer) | 1,4 |
| Vulkacit D (Bayer) | 2 |
| Schwefel (Solvey) | 1,6 |

Im Mischungskneter GK 1,5 wird bei 60 U/min und einer Vorlauftemperatur von 80°C der Kautschuk vorgelegt und 30 sec. geknetet. Bei konstanter Drehzahl werden 50 % Vulkasil und 50 % Silan Si69 zugegeben und 1 Minute gemischt. Danach wird der Rest Vulkasil, Si69, Ruß und Öl zugegeben und eine weitere Minute gemischt.

Dann werden Zinkoxid, Stearinsäure und Alterungsschutzmittel zugeben und wiederum 1 Minute gemischt. Nach kurzem Lüften des Stempels wird nochmals 1 Minute nachgemischt. Gesamtmischzeit 4,5 Min.

Auf der Walze werden bei 40°C Schwefel und Beschleuniger bis zur Homogenität des Fells ca. 5 Min. beigemischt.

**Tabelle 7**

| Beipiele | | 16 | 17 | 18 | 19 | 20 | 21 |
|---|---|---|---|---|---|---|---|
| Polymer | | Buna SL 25-0 | Beispiel 1 | Buna CB 10 | Beispiel 6 | Buna VSL 5025-0 | Beispiel 4 |
| F (MPa) | DIN 53504 | 19,1 | 21,6 | 16,9 | 18,4 | 15,4 | 16,0 |
| M 100 | DIN 53504 | 2,8 | 3,0 | 2,5 | 2,7 | 5,0 | 5,3 |
| H23 (Shore A) | DIN 53505 | 73 | 74 | 70 | 74 | 76 | 81 |
| H70 (Shore A) | DIN 53505 | 69 | 70 | 70 | 70 | 74 | 75 |

An den Prüfkörpern wurden anwendungstechnische Daten bestimmt. Auch in Silicamischungen sind bei vergleichbaren Härten Verbesserungen der mechanischen Eigenschaften zu beobachten. Dadurch lassen sich die gerade bei Silicamischungen bekannten Defizite verbessern.

## Patentansprüche

1. Verfahren zur Herstellung von Copolymerisaten auf Basis von vinylaromatischen Verbindungen und konjugierten Dienen, dadurch gekennzeichnet, dass man die vinylaromatischen Diencopolymeren nach deren Polymerisation mit mehrfunktionellen Schwefelhalogeniden in Gegenwart eines Katalysators bei Temperaturen im Bereich von 20 bis 130°C behandelt.

2. Verfahren nach Anspruch 1, dadurch gekennzeichnet, dass man als mehrfunktionelle Schwefelhalogenide Dischwefeldichlorid, Schwefeldichlorid, Thionylchlorid, Polyschwefeldichlorid, Dischwefeldibromid und/oder Polyschwefeldibromid einsetzt.

3. Verfahren nach Anspruch 1, dadurch gekennzeichnet, dass man als mehrfunktionelles Schwefelhalogenid Dischwefeldichlorid einsetzt.

4. Verfahren nach Anspruch 1, dadurch gekennzeichnet, dass man die Schwefelhalogenide in Mengen von 0,005 bis 5,0 Gew.-%, bezogen auf die Masse des Copolymerisats, einsetzt.

5. Verwendung der nach Anspruch 1 hergestellten Copolymerisate zur Herstellung von Kautschukformkörpern, insbesondere Reifenbauteilen.
